# EUROPÄISCHE PATENTANMELDUNG

(11) **EP 4 585 406 A1**
(43) Veröffentlichungstag der Anmeldung: **16.07.2025**
(21) Anmeldenummer: 24219644.2
(22) Anmeldetag: 13.12.2024
(51) Int. Cl.: B29D 30/30

(54) **VERFAHREN ZUM ERSTELLEN EINER SPULBANDAGE UND FAHRZEUGREIFEN**

(30) Priorität: 15.01.2024 DE 102024200336
(71) Anmelder: Continental Reifen Deutschland GmbH, 30175 Hannover (DE)
(72) Erfinder: Doroshenko, Mikheil, 30175 Hannover (DE); Wieting, Steffen Julius, 30175 Hannover (DE); Würger, Marco, 30175 Hannover (DE)
(74) Vertreter: Continental Corporation

(57) **Zusammenfassung**

Verfahren zum Erstellen einer als Spulbandage ausgeführten, aus zumindest einem elektrisch nicht leitenden Materialstreifen (4, 4') erstellten, in axialer Richtung in zwei Bandagenteile (6, 7) unter Freilassung einer Lücke (8) geteilten Gürtelbandage (2) auf einem Gürtel (1) eines Fahrzeugreifens, dessen Gürtellagen (1a, 1b) eine elektrisch leitende Gürtelgummierung aufweisen und welcher mit einem Laufstreifen (3) versehen wird, der aus elektrisch nicht leitendem Kautschukmaterial besteht und an der Position der Lücke (8) in radialer Richtung von einem streifenförmigen elektrisch leitenden Kautschukelement (3a) durchsetzt ist.

Dabei wird entweder mit einem ersten Spulkopf der eine Bandagenteil (6) und mit einem zweiten Spulkopf der andere Bandagenteil (7), jeweils aus einem separaten Materialstreifen (4, 4') gespult,
oder es werden die beiden Bandagenteile (6, 7) mit einem einzigen Spulkopf und einem einzigen Materialstreifen sequentiell gespult.

## Beschreibung

Die Erfindung betrifft ein Verfahren zum Erstellen einer als Spulbandage ausgeführten, aus zumindest einem elektrisch nicht leitenden Materialstreifen erstellten, in axialer Richtung in zwei Bandagenteile unter Freilassung einer Lücke geteilten Gürtelbandage auf einem Gürtel eines Fahrzeugreifens, dessen Gürtellagen eine elektrisch leitende Gürtelgummierung aufweisen und welcher mit einem Laufstreifen versehen wird, der aus elektrisch nicht leitendem Kautschukmaterial besteht und an der Position der Lücke in radialer Richtung von einem streifenförmigen, elektrisch leitenden Kautschukelement durchsetzt ist.

Die Erfindung betrifft ferner einen Fahrzeugreifen mit einem aus elektrisch nicht leitenden Gummimaterial bestehenden Laufstreifen, welcher an einer Stelle in radialer Richtung von einem streifenförmigen elektrisch leitenden Gummielement durchsetzt ist, und mit einem Gürtel aus zumindest zwei Gürtellagen mit einer elektrisch leitenden Gürtelgummierung und einer auf den Gürtel aufgebrachten, als Spulbandage ausgeführten, aus einem elektrisch nicht leitendem Materialstreifen erstellten Gürtelbandage, welche in axialer Richtung in zwei Bandagenteile geteilt ist, zwischen welchen das elektrisch leitende Gummielement bis zur radial äußeren Gürtellage reicht und mit dieser in Kontakt ist.

Ein derartiges Verfahren und ein derartiger Fahrzeugreifen sind beispielsweise aus der DE 10 2015 225 149 A1 bekannt. Die Gürtelbandage ist bei dieser bekannten Ausführung eine aus zumindest einem Materialstreifen gebildete und Stoß an Stoß gewickelte Spulbandage. Bei dem aus der EP 3 680 114 A1 bekannten Fahrzeugreifen weisen die Gürtellagen eine elektrisch nicht leitende Gürtelgummierung auf, hingegen ist die als einlagige Spulbandage hergestellte Gürtelbandage elektrisch leitend. Das den Laufstreifen durchsetzende elektrisch leitendes Gummielement steht mit der Gürtelbandage in Kontakt, eine elektrisch leitende Passage durch eine Seitenwand bzw. eine Karkasslage hindurch stellt bei auf einer Felge montiertem Reifen eine elektrisch leitende Verbindung zur Felge her.

Der Erfindung liegt die Aufgabe zugrunde, ein Verfahren der eingangs genannten Art zur Verfügung zu stellen, mit welchem sich eine als Spulbandage ausgeführte hochbelastbare Gürtelbandage auf besonders einfache, rationelle und zweckmäßige Weise herstellen lässt. Der Erfindung liegt ferner die Aufgabe zugrunde, einen Fahrzeugreifen der eingangs genannten Art mit einer als Spulbandage ausgeführten Gürtelbandage zur Verfügung zu stellen, die eine besonders hohe Festigkeit des Gürtelbereiches, insbesondere bei Verwendung der Reifen bei hohen Fahrzeug-Geschwindigkeiten, sicherstellt.

Was das Verfahren betrifft wird die gestellte Aufgabe erfindungsgemäß dadurch gelöst, dass
entweder mit einem ersten Spulkopf der eine Bandagenteil und mit einem zweiten Spulkopf der andere Bandagenteil, jeweils aus einem separaten Materialstreifen, gespult wird
oder die beiden Bandagenteile mit einem einzigen Spulkopf und einem einzigen Materialstreifen sequentiell gespult werden.

Gemäß dem Verfahren werden daher entweder zwei Spulköpfe oder es wird ein einziger Spulkopf eingesetzt, um die Gürtelbandage auf besonders rationelle und zweckmäßige Weise zu erstellen.

Beim Fahrzeugreifen gemäß der Erfindung ist jeder Bandagenteil jeweils aus einem Materialstreifen und unter gegenseitiger zumindest teilweiser abschnittsweiser Überlappung von in Spulrichtung aufeinanderfolgender Windungen gespult derart aufgebracht, dass die überlappenden Abschnitte der Windungen entweder in jedem Bandagenteil dem jeweiligen seitlichen Rand des Bandagenteils oder dem anderen Bandagenteil näher sind.

Der Fahrzeugreifen weist daher eine Gürtelbandage auf, die quasi zweilagig ist oder sein kann ohne in zwei Lagen erstellt worden zu sein. Dadurch, dass die Bandagenteile bezüglich des Gummielementes des Laufstreifens "symmetrisch überlappende Windungen" aufweisen, kann sich die Lücke zwischen den Bandagenteilen in einer an die jeweilige Profilierung im Laufstreifen angepassten Position befinden.

Bei einer bevorzugten Ausführung des Verfahrens wird jeder Bandagenteil beginnend bei einem der seitlichen Randbereiche des Gürtels oder der freizulassenden Lücke jeweils aus einem oder dem Materialstreifen und unter gegenseitiger teilweiser oder abschnittsweiser Überlappung aufeinanderfolgender Windungen derart gespult, sodass die überlappenden Abschnitte der Windungen in jedem Bandagenteil entweder dem jeweiligen seitlichen Rand des Bandagenteils oder dem anderen Bandagenteil näher sind. Die Überlappung beträgt bevorzugt 20 % bis 100 %, insbesondere bis 80 %, der Breite des Materialstreifens. Diese Maßnahmen gestatten eine besonders vorteilhafte Beeinflussung der Festigkeit der Gürtelbandage, beispielsweise um besonders haltbare Hochgeschwindigkeitsreifen zu erstellen.

Bei einer weiteren vorteilhaften Ausführungsvariante des Verfahrens wird jeder Bandagenteil mit dem oder mit seinem Spulkopf in einem Spulvorgang zweilagig und mit Stoß an Stoß liegenden Windungen gespult. Auch bei dieser Ausführungsvariante ist eine besonders rationelle und zweckmäßige Erstellung der Gürtelbandage bei gleichzeitig hoher Festigkeit derselben sichergestellt.

Die beiden Bandagenteile werden ferner vorteilhafterweise unter Freilassung einer Lücke mit einer Breite von 2,00 mm bis 20,00 mm, insbesondere 3,00 mm bis 10,00 mm, gespult. Eine derartige Lücke lässt ausreichend Raum für das Eindringen des Kautschukmaterials des im Laufstreifen eingefügten Kautschukelements während der Vulkanisation des Reifens.

Bei einer bevorzugten Ausführungsvariante werden die beiden Bandagenteile mit einem Materialstreifen gespult, der eine einzige Lage aus textilen Festigkeitsträgern enthält. Zur Herstellung von Gürtelbandagen mit besonders hoher Festigkeit ist es darüber hinaus vorteilhaft, wenn die beiden Bandagenteile mit einem Materialstreifen gespult werden, der zwei übereinander befindliche Lagen aus textilen Festigkeitsträgern enthält.

Eine besonders hohe Festigkeit lässt sich mit einer Gürtelbandage erzielen, bei welcher zusätzlich auf die Bandagenteile jeweils ein schulterseitiger Bandagenteil in einem Spulvorgang mit jenem Spulkopf, welcher jeweils den zugehörigen Bandagenteil spult, als Spulbandage mit Windungen, die insbesondere Stoß an Stoß liegen, aufgebracht wird. Die jeweiligen Vorteile und technischen Effekte der in den Ansprüchen 10 bis 13 enthaltenen Merkmale des Fahrzeugreifens ergeben sich aus den von Anspruch 1 abhängigen Verfahrensansprüchen.

Zun diesen Merkmalen gehört, dass im Fahrzeugreifen die überlappenden Abschnitte der Windungen eine Breite von 20 % bis 100 %, insbesondere bis 80 %, der Breite des Materialstreifens aufweisen.

Bei einer Ausführungsvariante bestehen die beiden Bandagenteile im Laufstreifen aus einem Materialstreifen, welcher zwei übereinander befindliche Lagen aus textilen Festigkeitsträgern enthält, alternativ bestehen die beiden Bandagenteile aus einem Materialstreifen, welcher eine einzige Lage aus textilen Festigkeitsträgern enthält.

Darüber hinaus ist es von Vorteil, wenn auf den Bandagenteilen jeweils zusätzlich ein gespulter schulterseitiger Bandagenteil aufgebracht ist, welcher aus einem Materialstreifen besteht, der dem Materialstreifen des zugehörigen Bandagenteils entspricht und dessen Windungen vorzugsweise Stoß an Stoß liegen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 Bauteile eines Reifens im Laufstreifenbereich mit einer ersten Ausführungsvariante der Erfindung
Fig. 2 bis Fig. 4 in zu Fig. 1 analogen Darstellungen weitere Ausführungsvarianten der Erfindung und
Fig. 5 und Fig. 6 Querschnitte von Ausführungen von Materialstreifen für Spulbandagen.

Gemäß der Erfindung ausgeführte Fahrzeugreifen sind insbesondere Reifen für Personenkraftwagen, Vans, Transporter, SUVs, Light-Trucks oder Nutzfahrzeuge und vorzugsweise Fahrzeugluftreifen in Radialbauart.

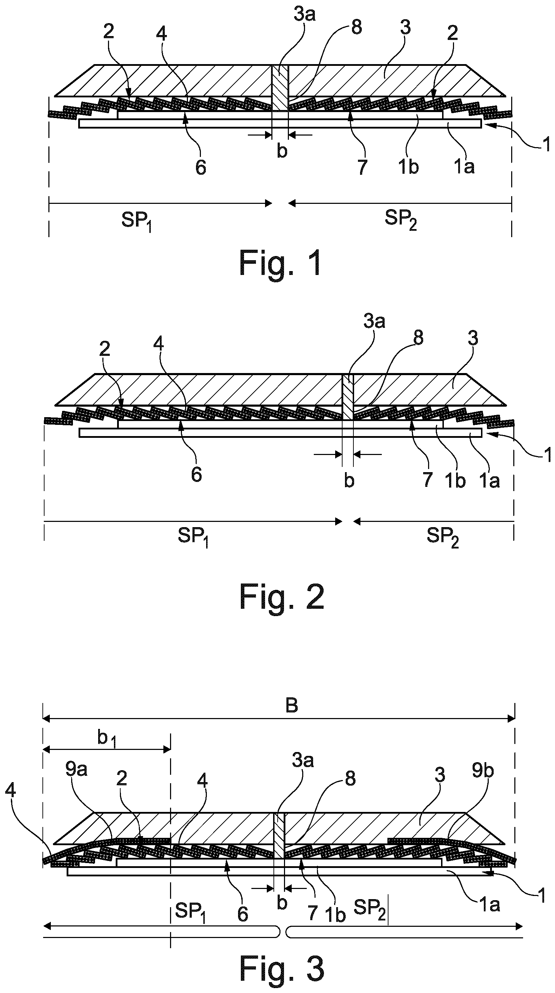

Fig. 1 bis Fig. 4 zeigen jeweils schematisch und im Querschnitt wesentliche Bauteile eines PKW-Reifens im Laufstreifenbereich. Dargestellt sind jeweils ein aus zwei Gürtellagen 1a, 1b bestehender Gürtel 1, der radial außen mit einer Gürtelbandage 2 bedeckt ist, welche seitlich über die Kanten der breiteren Gürtellage 1a reicht, und ein Laufstreifen 3. Die beiden Gürtellagen 1a, 1b bestehen aus parallel zueinander verlaufenden Festigkeitsträgern, insbesondere Stahlkorden, die in eine Gürtelgummierung aus elektrisch leitendes Gummimaterial eingebettet sind.

Der Laufstreifen 3 ist mit einer nicht dargestellten Profilierung, etwa aus Rillen und Einschnitten, versehen und ist beispielsweise entweder ein Monolaufstreifen aus einem einzigen Gummimaterial oder ein Laufstreifen, welcher sich in radialer Richtung und wie an sich bekannt aus zwei Schichten, einer Laufstreifenbase und einer Laufstreifencap, zusammensetzt, die aus unterschiedlichen Gummimischungen bestehen. Das Gummimaterial bzw. die Gummimaterialien des Laufstreifens 3 sind, abgesehen von einem Gummielement 3a - einem Carbon Center Beam - elektrisch nicht leitend. Das aus einem elektrisch leitenden Gummimaterial bestehende Gummielement 3a ist ein streifenförmiger, den Laufstreifen 3 in Umfangsrichtung umlaufender Bauteil, welcher den Laufstreifen 3 in axialer Richtung in zwei Laufstreifenteile teilt und an der Laufstreifenaußenfläche beispielsweise eine Breite von 2,00 mm aufweist. Der Laufstreifen 3 mitsamt dem Gummielement 3a wird durch Coextrusion hergestellt.

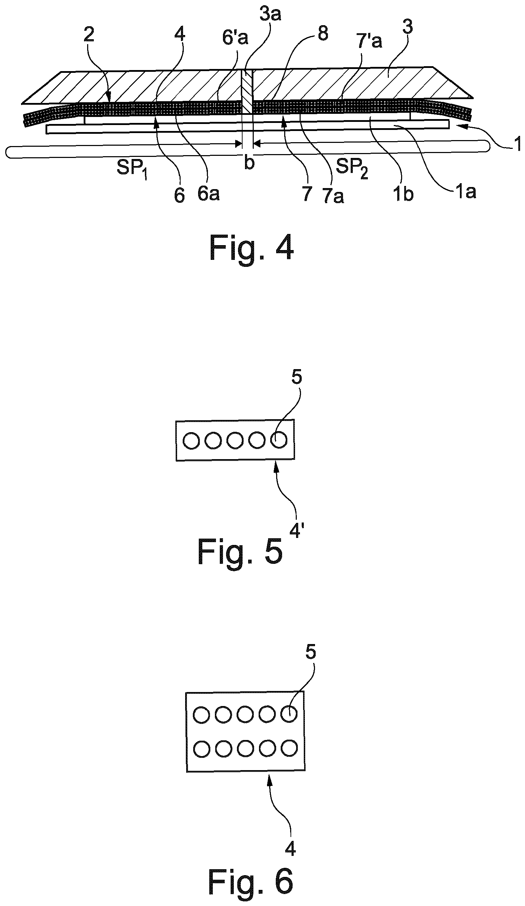

Bei sämtlichen in den Figuren 1 bis 4 gezeigten Ausführungen weist die Gürtelbandage 2 Bandagenteile auf, die jeweils als aus einem Materialstreifen 4 (Fig. 5), 4' (Fig.6) gebildete Spulbandage ausgeführt sind. Die Materialstreifen 4, 4' bestehen aus in elektrisch nicht leitendes Gummimaterial eingebetteten textilen Festigkeitsträgern, insbesondere aus Korden 5, beispielsweise aus Polyamid, Aramid oder PET (Polyethylenterephthalat) oder aus Hybridkorden der erwähnten Materialien. Im Materialstreifen 4 sind die Korde 5 in einer Anzahl von insbesondere fünf bis dreizehn nebeneinander und unter einem geringen Abstand zueinander in das Gummimaterial eingebettet, im Materialstreifen 4' befinden sich zwei Lagen der Korde in gleicher Anzahl, sodass der Materialstreifen 4' im Wesentlichen doppelt so dick ist wie der Materialstreifen 4.

Bei den in Fig. 1 bis 3 gezeigten Ausführungen weist die Gürtelbandage 2 in axialer Richtung zwei Bandagenteile 6, 7 auf, die jeweils als eine aus einem Materialstreifen 4 gebildete Spulbandage ausgeführt sind, deren Windungen unter gegenseitiger Überlappung mit einer Überlappungsbreite von 20 % bis 100 %, bei geschindelter Anordnung insbesondere bis zu 80%, der Materialstreifenbreite gespult sind. Dabei können insbesondere bis zu zwei Windungen einander auch um 100% überlappen bevor die anschließende Windung seitlich versetzt folgt. Bei der in Fig. 1 und Fig. 3 gezeigten Ausführung sind die die beiden Bandagenteile 6, 7 übereinstimmend breit und jeweils von einem seitlichen Randbereich des Gürtels 2 bis in den mittleren Bereich des Gürtels 2 bzw. des Laufstreifens 3 unter Freilassen einer Lücke 8 mit einer in axialer Richtung ermittelten Breite b von 2,00 mm bis 20,00 mm, insbesondere von 3,00 mm bis 10,00 mm, gespult. Bei der in Fig. 2 gezeigten Ausführung weisen die beiden Bandagenteile 6, 7 unterschiedliche Breiten auf, wobei sie ebenfalls mit einer Lücke 8 erstellt werden. Die einander überlappenden Windungen in Fig. 1 bis 3 sind derart erstellt, dass die Bandagenteile 6, 7 ausgehend jeweils von einem seitlichen Randbereich des Gürtels 2 gespult sind, sodass die überlappenden Abschnitte der Windungen in jedem Bandagenteil 6, 7 dem jeweiligen seitlichen Rand des Bandagenteils 6, 7 näher sind. Bei einer alternativen Ausführung sind die Bandagenteils 6, 7 ausgehend von der Lücke 8 in Richtung zu den seitlichen Randbereichen des Gürtels 3 aufeinander zu gespult, sodass die überlappenden Abschnitte der Windungen in jedem Bandagenteil 6, 7 jeweils dem anderen Bandagenteil 6,7 näher sind.

Die Position des Gummielements 3a entspricht der Position der ursprünglich vorhandenen Lücke 8, sodass die im Rohreifen fließfähige Kautschukmischung des Elements 3a während der Vulkanisation des Reifens in einer Vulkanisationsform in die Lücke 8 zwischen die beiden Bandagenteile 6, 7 eindringt und im fertig vulkanisierten Reifen als Teil des Gummielements 3a eine elektrisch leitende Passage bildet, die mit der elektrisch leitenden Gürtelgummierung der oberen Gürtellage 1b in Kontakt steht.

Bei der Herstellung des Gürtelverbandes aus den Gürtellagen 1a, 1b und den beiden Bandagenteilen 6, 7 wird jeder Bandagenteil 6, 7 mit einem separaten Spulkopf hergestellt, entweder ausgehend von den seitlichen Randkantenbereichen der breiteren Gürtellage 1a oder von der Lücke 8, wobei die beiden Bandagenteile 6, 7 gleichzeitig gespult werden können. Die beiden Pfeile SP₁ und SP₂ in Fig. 1 bis Fig. 3 versinnbildlichen die erstgenannte Richtung der Spulung durch die beiden Spulköpfe. Bei einer weiteren Ausführung wird ein einziger Spulkopf verwendet, welcher mit einem einzigen Materialstreifen die beiden Bandagenteile 6, 7 sequentiell, als nacheinander, erstellt.

Bei der in Fig. 3 gezeigten Ausführungsvariante wird auf die Bandagenteile 6,7 jeweils ein schulterseitiger Bandagenteil 9a, 9b mit jenem Spulkopf, welcher jeweils den zugehörigen Bandagenteil 6, 7 spult, ebenfalls als Spulbandage aufgebracht ist, wobei sich die einzelnen Windungen Stoß an Stoß befinden. Die schulterseitige Bandagenteile 9a, 9b weisen eine in die axiale Richtung projizierte Breite b₁ auf, die 10 % bis 20 % der ebenfalls in die axiale Richtung projizierten Breite B der gesamten Gürtelbandage 2 entspricht.

Fig. 4 zeigt eine Ausführung, bei welcher die Gürtelbandage 2 in zwei Bandagenteile 6, 7 geteilt ist, die jeweils aus zwei aufeinander befindlichen Lagen 6a, 6'a und 7a, 7'a übereinstimmender Breite bestehen. Die Lagen 6a, 6'a sowie 7a, 7'a sind nacheinander oder in einem als Spulbandage erstellt und Stoß an Stoß gewickelt, die Lagen 6a, 6'a in einem Spulvorgang mit einem ersten Spulkopf, die Lagen 7a, 7'a in einem Spulvorgang mit einem zweiten Spulkopf mit einer mittigen Lücke 8, alternativ mit einem einzigen Spulkopf und nacheinander. Die unterhalb der Fig. 4 eingezeichneten Pfeile SP₁ und SP₂ symbolisieren jeweils die eine mögliche Spulrichtung. In die Lücke 8 ist, wie bereits beschrieben, während der Vulkanisation des Reifens das noch fließfähige Kauschukmaterial des Gummielements 3a hineingeflossen und bildet als Teil des Gummielements 3a eine elektrisch leitende Passage, die mit der elektrisch leitenden Gürtelgummierung der oberen Gürtellage 1b in Kontakt steht.

Bei sämtlichen Ausführungsvarianten wird zur Herstellung der Gürtelbandage entweder ein Materialstreifen 4 oder ein Materialstreifen 4' verwendet.

Unter einem elektrisch leitenden Gummimaterial oder sonstigem elektrisch leitenden Material im Reifen wird ein solches verstanden, welches einen spezifischen elektrischen Widerstand von ≤ 10⁸ Ω cm aufweist.

Die elektrisch leitende Verbindung des Gürtellagen zur Felge erfolgt über zumindest einen der Seitenwandbereiche des Reifens, beispielsweise einer elektrisch leitenden Passage in der Seitenwand und dem Hornprofil, sodass bei auf der Felge montiertem Fahrzeugreifen eine elektrisch leitende Verbindung mit der Felge gegeben ist.

Auf die gebildete Gürtelbandage wird bei der Herstellung des Reifens in bekannter Weise der rohe Laufstreifen aufgebracht und das fertig aufgebaute Gürtel-/Laufstreifenpaket wird anschließend in bekannter Weise mit einer separat aufgebauten Reifenkarkasse zusammengefügt, insbesondere wird das Gürtel-/Laufstreifenpaket zur und über die aufgebaute Reifenkarkasse transferiert und durch Bombieren der Reifenkarkasse mit dieser verbunden. Der fertig aufgebaute Rohreifen wird in einer Vulkanisationsform vulkanisiert.

### Bezugszeichenliste

- 1: Gürtel
- 1a, 1b: Gürtellage
- 2: Gürtelbandage
- 2a, 2b: Bandagenteil
- 3: Laufstreifen
- 3a: Gummielement
- 4: Materialstreifen
- 5: Kord
- 6, 7: Bandagenteil
- 6a, 6'a: Lage
- 7a, 7'a: Lage
- 8: Lücke
- 9a, 9b: schulterseitiges Bandagenteil
- b: Breite (Lücke 8)
- b₁: Breite (Bandagenteil 9a, 9b)
- B: Breite (Gürtelbandage)
- SP₁, SP₂: Richtung der Spulung

## Patentansprüche

1. Verfahren zum Erstellen einer als Spulbandage ausgeführten, aus zumindest einem elektrisch nicht leitenden Materialstreifen (4, 4') erstellten, in axialer Richtung in zwei Bandagenteile (6, 7) unter Freilassung einer Lücke (8) geteilten Gürtelbandage (2) auf einem Gürtel (1) eines Fahrzeugreifens, dessen Gürtellagen (1a, 1b) eine elektrisch leitende Gürtelgummierung aufweisen und welcher mit einem Laufstreifen (3) versehen wird, der aus elektrisch nicht leitendem Kautschukmaterial besteht und an der Position der Lücke (8) in radialer Richtung von einem streifenförmigen elektrisch leitenden Kautschukelement (3a) durchsetzt ist,
**dadurch gekennzeichnet,**
**dass** entweder mit einem ersten Spulkopf der eine Bandagenteil (6) und mit einem zweiten Spulkopf der andere Bandagenteil (7), jeweils aus einem separaten Materialstreifen (4, 4') gespult wird
oder die beiden Bandagenteile (6, 7) mit einem einzigen Spulkopf und einem einzigen Materialstreifen sequentiell gespult werden.

2. Verfahren nach Anspruch 1, **dadurch gekennzeichnet, dass** jeder Bandagenteil (6, 7) beginnend bei einem der seitlichen Randbereiche des Gürtels (1) oder der freizulassenden Lücke (8) jeweils aus einem oder dem Materialstreifen (4, 4') und unter gegenseitiger teilweiser oder abschnittsweiser Überlappung aufeinanderfolgender Windungen gespult wird, sodass die überlappenden Abschnitte der Windungen in jedem Bandagenteil (6, 7) entweder dem jeweiligen seitlichen Rand des Bandagenteils (6, 7) oder dem anderen Bandagenteil (6, 7) näher sind.

3. Verfahren nach Anspruch 2, **dadurch gekennzeichnet, dass** mit einer Überlappung von 20% bis 100%, insbesondere bis 80%, der Breite des Materialstreifens (4, 4') gespult wird.

4. Verfahren nach Anspruch 1, **dadurch gekennzeichnet, dass** jeder Bandagenteil (6, 7) mit dem bzw. seinem Spulkopf in einem Spulvorgang zweilagig und mit Stoß an Stoß liegenden Windungen gespult wird.

5. Verfahren nach einem der Ansprüche 1 bis 4, **dadurch gekennzeichnet, dass** die beiden Bandagenteile (6, 7) unter Freilassung einer Lücke (8) mit einer Breite von 2,00 mm bis 20,00 mm, insbesondere von 3,00 mm bis 10,00 mm, gespult werden.

6. Verfahren nach einem der Ansprüche 1 bis 5, **dadurch gekennzeichnet, dass** die beiden Bandagenteile (6, 7) mit einem Materialstreifen (4) gespult werden, der eine einzige Lage aus textilen Festigkeitsträgern enthält.

7. Verfahren nach einem der Ansprüche 1 bis 5, **dadurch gekennzeichnet, dass** die beiden Bandagenteile (6, 7) mit einem Materialstreifen (4) gespult werden, der zwei übereinander befindliche Lagen aus textilen Festigkeitsträgern enthält.

8. Verfahren nach einem der Ansprüche 1 bis 7, **dadurch gekennzeichnet, dass** zusätzlich auf die Bandagenteile (6, 7) jeweils ein schulterseitiger Bandagenteil (9a, 9b) mit dem bzw. mit jenem Spulkopf, welcher jeweils den zugehörigen Bandagenteil (6, 7) spult, als Spulbandage mit Windungen, die insbesondere Stoß an Stoß gespult werden, aufgebracht wird.

9. Fahrzeugreifen mit einem aus elektrisch nicht leitenden Gummimaterial bestehenden Laufstreifen (3), welcher an einer Stelle in radialer Richtung von einem streifenförmigen elektrisch leitenden Gummielement (3a) durchsetzt ist, und mit einem Gürtel (1) aus zumindest zwei Gürtellagen (1a, 1b) mit einer elektrisch leitenden Gürtelgummierung und einer auf den Gürtel (1) aufgebrachten, als Spulbandage ausgeführten, aus einem elektrisch nicht leitendem Materialstreifen (4, 4') erstellten Gürtelbandage (2), welche in axialer Richtung in zwei Bandagenteile (6, 7) geteilt ist, zwischen welchen das elektrisch leitende Gummielement (3a) bis zur radial äußeren Gürtellage (1b) reicht und mit dieser in Kontakt ist,
**dadurch gekennzeichnet,**
**dass** jeder Bandagenteil (6, 7) jeweils aus einem Materialstreifen (4, 4') und unter gegenseitiger zumindest teilweiser oder abschnittsweiser-Überlappung von in Spulrichtung aufeinanderfolgender Windungen gespult derart aufgebracht ist, dass die überlappenden Abschnitte der Windungen entweder in jedem Bandagenteil (6, 7) dem jeweiligen seitlichen Rand des Bandagenteils oder dem anderen Bandagenteil näher sind.

10. Fahrzeugreifen nach Anspruch 9, **dadurch gekennzeichnet, dass** die überlappenden Abschnitte der Windungen eine Breite von 20% bis 100 %, insbesondere bis 80%, der Breite des Materialstreifens (4, 4') aufweisen.

11. Fahrzeugreifen nach Anspruch 9 oder 10, **dadurch gekennzeichnet, dass** die beiden Bandagenteile (6, 7) aus einem Materialstreifen (4') bestehen, welcher zwei übereinander befindliche Lagen aus textilen Festigkeitsträgern enthält.

12. Fahrzeugreifen nach Anspruch 9 oder 10, **dadurch gekennzeichnet, dass** die beiden Bandagenteile (6, 7) aus einem Materialstreifen (4) bestehen, welcher eine einzige Lage aus textilen Festigkeitsträgern enthält.

13. Fahrzeugreifen nach einem der Ansprüche 9 bis 12, **dadurch gekennzeichnet, dass** auf den Bandagenteilen (6, 7) jeweils schulterseitig ein zusätzlicher gespulter schulterseitiger Bandagenteil (9a, 9b) aufgebracht ist, welcher aus einem Materialstreifen (4, 4'), der dem Materialstreifen des zugehörigen Bandagenteils (6, 7) entspricht, besteht und dessen Windungen vorzugsweise Stoß an Stoß liegen.
